(19) Europäisches Patentamt / European Patent Office / Office européen des brevets

(11) **EP 4 468 833 B1**

(12) **EUROPEAN PATENT SPECIFICATION**

(45) Date of publication and mention of the grant of the patent:
**18.03.2026 Bulletin 2026/12**

(21) Application number: **22928820.4**

(22) Date of filing: **01.09.2022**

(51) International Patent Classification (IPC):
*H05K 5/03* (2006.01)  *F16C 11/04* (2006.01)
*H01R 13/52* (2006.01)  *B60K 37/20* (2024.01)
*B60R 7/06* (2006.01)  *B60R 11/02* (2006.01)
*H01R 13/453* (2006.01)  *H01R 24/62* (2011.01)
*B60R 11/00* (2006.01)

(52) Cooperative Patent Classification (CPC):
**H01R 13/4532; B60K 37/20; B60R 11/0258;**
**F16C 11/045;** B60K 2360/682; B60R 2011/0005;
B60R 2011/0094; H01R 13/5213; H01R 24/62;
H01R 2201/26

(86) International application number:
**PCT/JP2022/032929**

(87) International publication number:
**WO 2023/162299 (31.08.2023 Gazette 2023/35)**

(54) **OPENING/CLOSING STRUCTURE**

ÖFFNUNGS- UND SCHLIESSSTRUKTUR

STRUCTURE D'OUVERTURE/FERMETURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2022 JP 2022025735**

(43) Date of publication of application:
**27.11.2024 Bulletin 2024/48**

(73) Proprietor: **JVCKENWOOD CORPORATION**
**Yokohama-shi, Kanagawa 2210022 (JP)**

(72) Inventors:
• **MIZUGUCHI, Haruna**
**Yokohama-shi, Kanagawa 221-0022 (JP)**

• **ANAMI, Takehisa**
**Yokohama-shi, Kanagawa 221-0022 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(56) References cited:
JP-A- 2001 044 647     JP-A- 2014 239 156
JP-A- 2014 239 156     JP-U- H0 644 186
US-A1- 2007 267 428

## Description

### Field

The present invention relates to an opening and closing structure.

### Background

For example, a structure that covers, with an opening and closing lid, a front side of a connecting terminal arranged on a front side of a main unit case has been disclosed in Patent Literature 1. The opening and closing lid has a main lid unit that covers the front side of the connecting terminal, and a belt-shaped engaging piece inserted in an engagement hole of the main unit case from one end side of the main lid unit.

### Citation List

### Patent Literature

Japanese Laid-open Patent Publication No. JP 2013-103594 A

### Summary

### Technical Problem

A cantilevered opening and closing structure as described in Patent Literature 1 has a supporting unit that extends in a cantilevered manner from an opening and closing lid, and this supporting unit is supported at a pivot point on a fixed side to allow the opening and closing lid to rotate. In such an opening and closing structure, it is desirable to provide an appropriate operational feel when the opening and closing lid is in an open state and in a closed state. Further relevant prior art is known from JP H06 44186 U.

The present disclosure aims to provide an opening and closing structure that enables to set an operational feel when a cantilever opening and closing lid is opened and closed.

### Solution to Problem

According to one aspect of the present invention, there is provided an opening and closing structure with an opening and closing flap that opens and closes an opening portion of a main unit, comprising: a supporting portion that is provided in the opening and closing flap and that is formed to extend in a cantilevered manner with flexibility; a pivot pin that rotatably supports the supporting portion with respect to the main unit; a convex portion that is arranged in the main unit; and a concave portion that is arranged in the supporting portion and that engages with the convex portion, wherein the concave portion comprises a first concave portion that engages with the convex portion when the opening and closing flap moves in one direction of opening and closing, and a second concave portion that engages with the convex portion when the opening and closing flap moves in another direction of opening and closing, and the first concave portion and the second concave portion have different engagement forms for the convex portion.

### Advantageous Effects of Invention

According to the present invention, it is possible to set an operating feel when a cantilever opening and closing lid is opened and closed.

### Brief Description of Drawings

FIG. 1 is a perspective view illustrating a closed state of an opening and closing structure according to an embodiment of the invention;
FIG. 2 is a perspective view illustrating an open state of the opening and closing structure according to the embodiment;
FIG. 3 is a perspective view illustrating a main unit of the opening and closing structure according to the embodiment;
FIG. 4 is a perspective view illustrating an opening and closing flap of the opening and closing structure according to the embodiment;

FIG. 5 is a cross-sectional exploded view illustrating a main part of the opening and closing structure according to the embodiment;

FIG. 6 is a plan view illustrating a main part of another example of the opening and closing structure according to the embodiment; and

FIG. 7 is a cross-section illustrating a main part of another example of the opening and closing structure according to the embodiment.

**Description of Embodiments**

Hereinafter, forms (hereinafter, embodiments) to implement the present disclosure will be explained in detail referring to the drawings. The embodiments described below are not intended to limit the present disclosure.

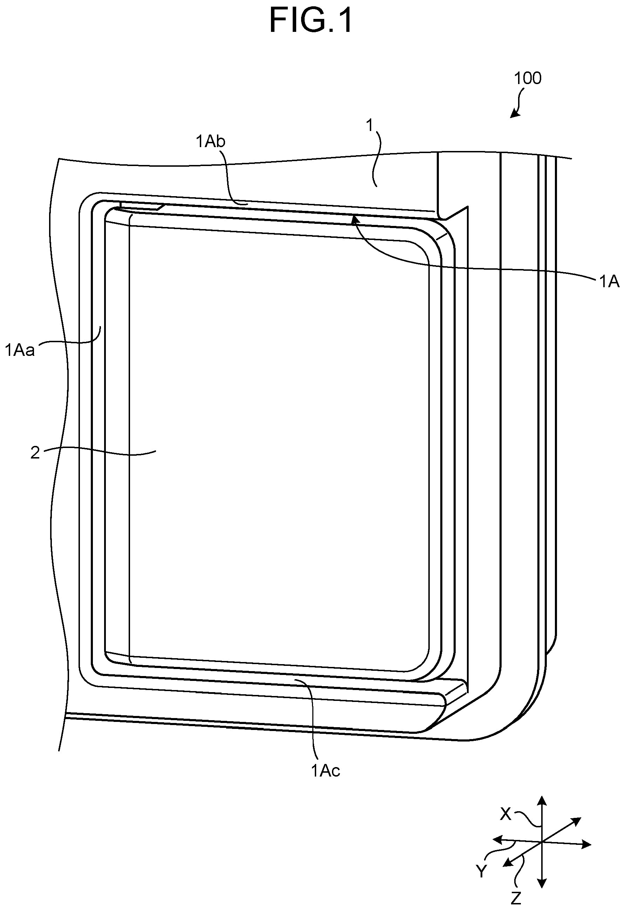

An opening and closing structure of an embodiment of the invention illustrated in FIG. 1 to FIG. 5 is applied to, for example, an electronic device 100 equipped in an interior of a vehicle. The electronic device 100 includes, for example, an audio visual (AV) integrated car navigation system. In the respective drawings, an X direction is a vertical direction, a Y direction is a horizontal direction, and a Z direction is a forward-backward direction.

The opening and closing structure of the embodiment includes a main unit 1 and an opening and closing flap 2 as illustrated in FIG. 1 to FIG. 4.

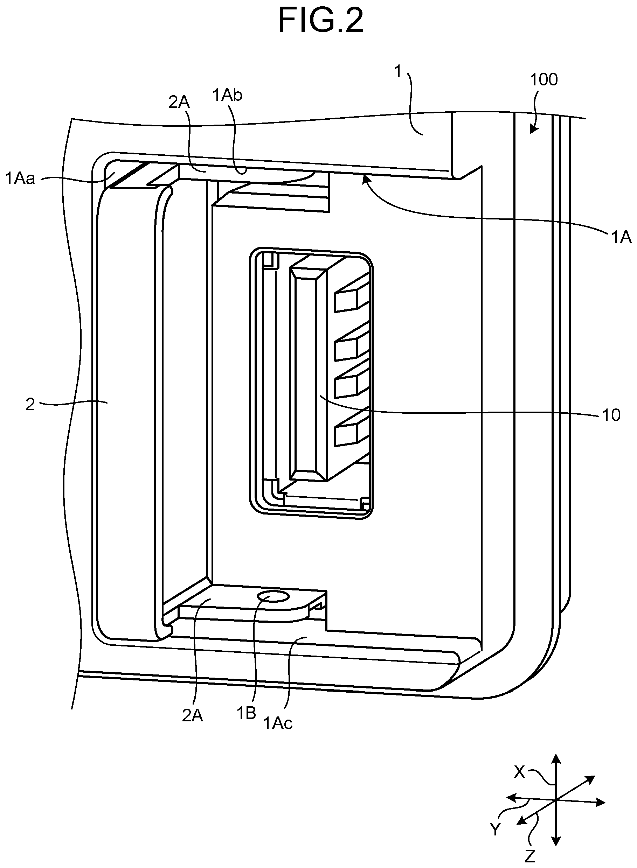

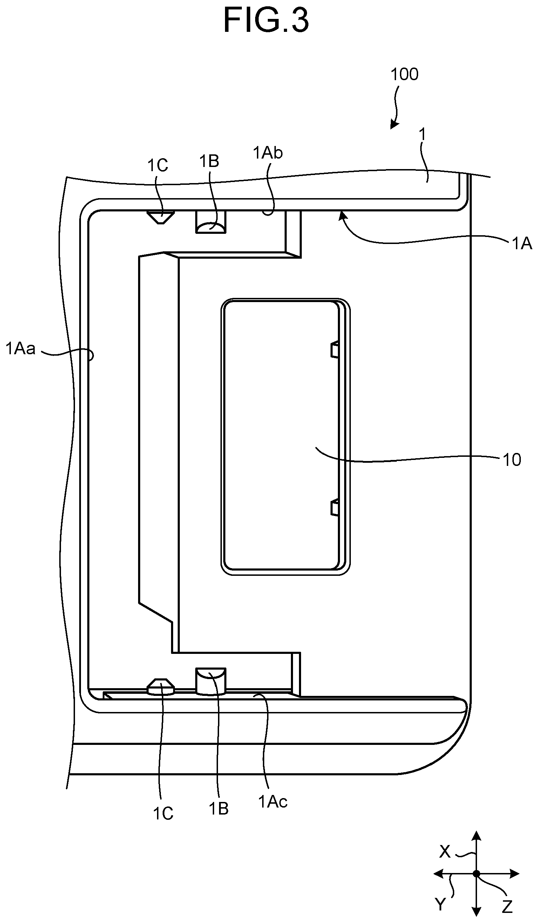

The main unit 1 is arranged over an operation panel (not illustrated) of the electronic device 100, and has an opening portion 1A. In the opening portion 1A, a terminal connector portion 10 thereof is arranged. The terminal connector portion 10 includes, for example, a universal serial bus (USB) terminal connector portion. The opening portion 1A is formed in a rectangular shape along a vertical direction and a horizontal direction to match a shape of the terminal connector portion 10. The opening portion 1A is formed with a side inner wall 1Aa along the vertical direction, an upper inner wall 1Ab, and a lower inner wall 1Ac along the horizontal direction to surround the terminal connector portion 10 thereinside as illustrated in FIG. 2 and FIG. 3.

The main unit 1 includes pivot pins 1B and convex portions 1C inside the opening portion 1A. The pivot pins 1B are arranged on the upper inner wall 1Ab and the lower inner wall 1Ac, and are formed in a cylindrical shape extending in the vertical direction to oppose each other. The convex portions 1C are arranged on the upper inner wall 1Ab and the lower inner wall 1Ac, and are formed to protrude in the vertical direction to oppose each other. The convex portion 1C is arranged on one side in the horizontal direction relative to the pivot pin 1B, and on a side toward which the opening and closing flap 2 is moved when it is rotated about the pivot pin 1B from the closed state to the open state. The convex portion 1C protrudes in a cylindrical shape, and is formed to have its protruding end tapered in a conical shape or a hemispherical shape. The convex portion 1C may be configured to be arranged on either one of the upper inner wall 1Ab or the lower inner wall 1Ac.

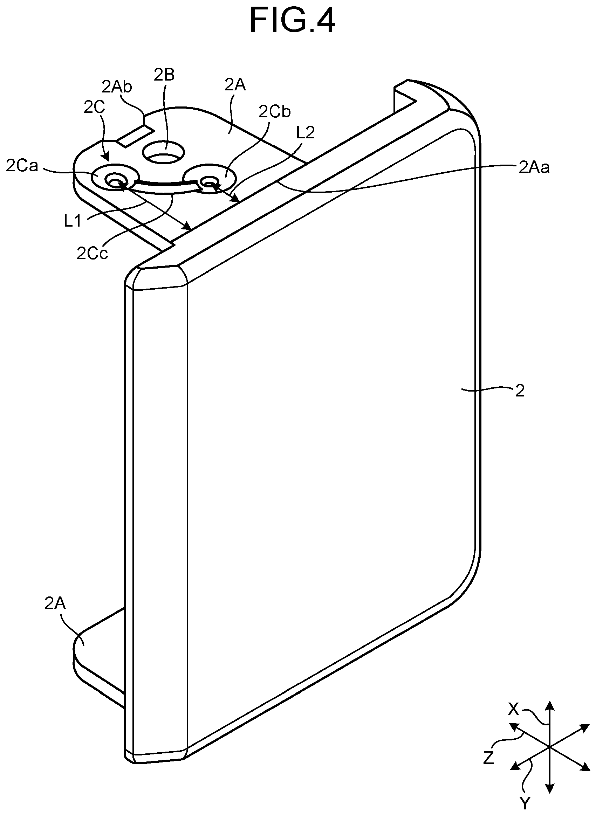

The opening and closing flap 2 is formed in a rectangular plate shape along the vertical direction and the horizontal direction so as to close the opening portion 1A. The opening and closing flap 2 has supporting portions 2A as illustrated in FIG. 2 and FIG. 4. The supporting portions 2A are provided at an upper portion and a lower portion of the opening and closing flap 2 to extend in a cantilevered manner from a surface facing the opening portion 1A in a state in which the opening portion 1A is closed with the opening and closing flap 2, and is formed in a plate shape along the upper inner wall 1Ab and the lower inner wall 1Ac in pairs to oppose each other in the vertical direction. In the supporting portion 2A, a shaft hole 2B in which the pivot pin 1B is inserted is formed therethrough. Therefore, the opening and closing flap 2 is supported rotatably about the pivot pins 1B with respect to the main unit 1 by being assembled in the main unit 1 by inserting the pivot pin 1B in the shaft hole 2B of the supporting portion 2A. Thus, the opening and closing flap 2 can be in a state between a closed state of covering the terminal connector portion 10 by closing the opening portion 1A of the main unit 1 as illustrated in FIG. 1 and an open state of exposing the terminal connector portion 10 by opening the opening portion 1A of the main unit 1 as illustrated in FIG. 2.

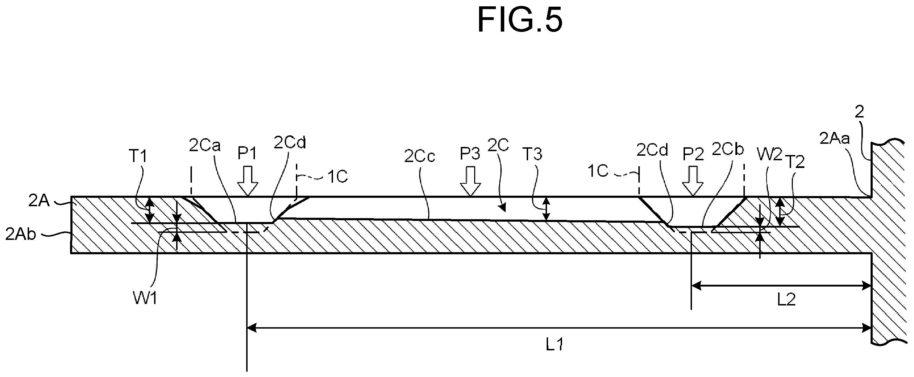

The opening and closing flap 2 has a concave portions 2C formed in the supporting portion 2A. The concave portions 2C are formed on a surface facing the upper inner wall 1Ab in the upper supporting portion 2A, and on a surface facing the lower inner wall 1Ac in the lower supporting portion 2A. The respective concave portions 2C are formed in symmetry with respect to a plane in the vertical direction in the upper supporting portion 2A and the lower supporting portion 2A. FIG. 5 illustrates the concave portion 2C in the upper supporting portion 2A. The concave portion 2C engages with the convex portion 1C, and when the convex portion 1C is arranged only in the upper inner wall 1Ab, it is formed only in the upper supporting portion 2A, and when the convex portion 1C is arranged only in the lower inner wall 1Ac, it is formed only in the lower supporting portion 2A. The concave portion 2C includes a first concave portion 2Ca, a second concave portion 2Cb, and a third concave portion 2Cc.

The first concave portion 2Ca is arranged at such a position that it engages with the convex portion 1C when the opening and closing flap 2 moves in rotation in one direction of opening and closing, in this embodiment, when the opening and closing flap 2 is moved to the closed state as illustrated in FIG. 4. The first concave portion 2Ca is formed to be recessed in a mortar shape or a hemispherical shape such that the protruding end in a conical shape of a hemispherical shape of the convex portion 1C engages therewith.

As illustrated in FIG. 4, the second concave portion 2Cb is arranged at such a position that it engages with the convex portion 1C when the opening and closing flap 2 moves in rotation in the other direction of opening and closing, in this embodiment, when the opening and closing flap 2 is moved to the open state. The second concave portion 2Cb is formed to be recessed in a mortar shape or a hemispherical shape such that the protruding end in a conical shape of a hemispherical shape of the convex portion 1C engages therewith.

The first concave portion 2Ca and the second concave portion 2Cb are arranged along a trajectory of a circle centered around the shaft hole 2B. In the embodiment, the first concave portion 2Ca and the second concave portion 2Cb are arranged to have a positional relationship of 90 degrees around the shaft hole 2B to rotate the opening and closing flap 2 rotates by 90 degrees between the closed state and the open state. For example, the first concave portion 2Ca and the second concave portion 2Cb are arranged to have a positional relationship of 100 degrees around the shaft hole 2B when the opening and closing flap 2 is rotated by 100 degrees between the closed state and the open state.

Moreover, as illustrated in FIG. 4 and FIG. 5, the first concave portion 2Ca and the second concave portion 2Cb are arranged such that the first concave portion 2Ca is arranged on a distal end 2Ab side and the second concave portion 2Cb is arranged on a base end 2Aa side in an extending direction (forward-backward direction (Z direction)) of the supporting portion 2A that extends from the opening and closing flap 2 in a cantilevered manner. The first concave portion 2Ca is arranged at a position at a distance L1 from the base end 2Aa of the supporting portion 2A. The second concave portion 2Cb is arranged at a position at a distance L2 from the base end 2Aa of the supporting portion 2A. As for the distances L1, L2, the distance L1 of the first concave portion 2Ca is longer than the distance L2 of the second concave portion 2Cb.

Moreover, as illustrated in FIG. 5, the first concave portion 2Ca has a bottom at a position of a depth T1 from a plate surface of the supporting portion 2A. The second concave portion 2Cb has a bottom at a position of a depth T2 from the plate surface of the supporting portion 2A. As for the depths T1, T2, the depth T1 of the first concave portion 2Ca is shallower than the depth T2 of the second concave portion 2Cb. These depths T1, T2 are arranged so that the supporting portion 2A in a cantilever shape deflects in the vertical direction which is the axial direction in which the pivot pin 1B extends when the convex portion 1C engages with the concave portions 2Ca, 2Cb. The opening and closing flap 2 is arranged without looseness with respect the main unit in the closed state and the open state as the supporting portion 2A deflects.

Furthermore, in the opening and closing flap 2, since the first concave portion 2Ca at the far distance L1 from the base end 2Aa of the supporting portion 2A is formed to have the shallow depth T1, the supporting portion 2A has a relatively large amount of deflection W1 in the closed state in which the convex portion 1C engages with the first concave portion 2Ca. Moreover, in the opening and closing flap 2, since the second concave portion 2Cb at the close distance L2 from the base end 2Aa of the supporting portion 2A is formed to have the deep depth T2, the supporting portion 2A has a relatively small amount of deflection W2 in the open state in which the convex portion 1C engages with the second concave portion 2Cb. As described, in the opening and closing structure of the embodiment, the deflections W1, W2 of the supporting portion 2A are set by differing the depths T1, T2 according to arrangement of the distances L1, L2 of the concave portions 2Ca, 2Cb since the supporting portion 2A is a cantilever and becomes easier to deflect as it approaches the distal end 2Ab from the base end 2Aa. Therefore, in the opening and closing structure of the embodiment, loads P1, P2 for bending the supporting portion 2A can be equivalent to each other in the closed state and the open state of the opening and closing flap 2, and an operator can perform opening and closing operation with natural feeling without discomfort. When it is desired to make the operational feel in either one of the closed state and the open state heavier, the depth T1 or T2 of the relevant concave portion 2Ca or 2Cb may be made shallower, and on the other hand, when it is desired to make the operational feel lighter, the depth T1 or T2 of the relevant one of the concave portion 2Ca or, 2Cb may be made deeper, to set the deflections W1, W2, and the loads P1, P2 are set to bend the supporting portion 2A appropriately.

The deflections W1, W2, which are interference amounts with the convex portion 1C at the respective positions of the concave portions 2Ca, 2Cb are regarded as a deflection Wmax of the cantilever formed with the supporting portion 2A. Moreover, the distances L1, L2 of the concave portions 2Ca, 2Cb are regarded as a length L from a fulcrum of the cantilever (the base end 2Aa of the supporting portion 2A) to a force point (the concave portions 2Ca, 2Cb). Furthermore, the loads P1, P2 to bend the supporting portion 2A are regarded as a load P applied to the force point of the cantilever. When the cantilever is made from the same material and the same cross-sectional shape (in a cross-section perpendicular to its length), the load P is determined by values of the length L and the deflection Wmax based on a following Equation 1.

$$P = \frac{Ebh^3 w_{max}}{4L^3} \qquad \cdots \text{Equation } 1$$

In the Equation 1, E represents Young's modulus, b represents a cross-section width of the cantilever, and h represents a cross-section height of the cantilever. Since the load P is proportional to cube of the length L, a small difference in the length L produces a large difference as a value of the load P, and to cause a difference in the operational feel in the closed state and the open state of the opening and closing flap 2. Therefore, in the opening and closing structure according to the embodiment, by adjusting the depths T1, T2 of the concave portions 2Ca, 2Cb, it is possible to set the deflections W1, W2, define the loads P1, P2, and set the operational feel appropriately. As in the opening and closing structure according to the embodiment, in a structure in which the opening and closing flap 2 rotates in a cantilevered manner with respect to the main unit 1, it is difficult to adjust the distances L1, L2, and thus the deflections W1, W2 are adjusted to adjust the loads P1, P2.

The third concave portion 2Cc is formed in an arc shape centered around the pivot pin 1B (the shaft hole 2B) connecting the first concave portion 2Ca and the second concave portion 2Cb as illustrated in FIG. 4. Therefore, the third concave portion 2Cc is arranged on a trajectory of the convex portion 1C as the opening and closing flap 2 is moved between the closed state and the open state. In the opening and closing structure according to the embodiment, the third concave portion 2Cc is formed such that an engagement form with respect to the convex portion 1C gradually varies between the first concave portion 2Ca and the second concave portion 2Cb. Specifically, the third concave portion 2Cc is formed such that a depth T3 from the plate surface of the supporting portion 2A becomes shallower as it approaches the first concave portion 2Ca, the depth T1 of which is relatively shallow, and becomes deeper as it approaches the second concave portion 2Cb, the depth T2 of which is relatively deep as illustrated in FIG. 5. Therefore, in the opening and closing flap 2, the deflections W1, W2 of the supporting portion 2A are adjusted while moving between the closed state and the open state, and the load P3 that bends the supporting portion 2A becomes equivalent in the longitudinal direction of the third concave portion 2Cc, and the opening and closing operation can be performed by the operator with a uniform operational feel between the first concave portion 2Ca and the second concave portion 2Cb. In the opening and closing structure according to the embodiment, the third concave portion 2Cc is formed such that the depth T3 is shallower than the depths T1, T2, and a step portion 2Cd is formed at a boundary at which the third concave portion 2Cc is connected to the first concave portion 2Ca and the second concave portion 2Cb. Therefore, when the opening and closing flap 2 is brought to the closed state and the open state, the convex portion 1C engages with the first concave portion 2Ca and the second concave portion 2Cb through the step portion 2Cd. Therefore, in the opening and closing structure according to the embodiment, when the opening and closing flap 2 is operated to be in the closed state and the open state, the convex portion 1C falls in the first concave portion 2Ca and the second concave portion 2Cb through the step portion 2Cd with a tactile feedback to the operator. When a tactile feedback is not desired, the depth T3 may be set to the same dimensions as the depths T1 and T2 without arranging the step portion 2Cd.

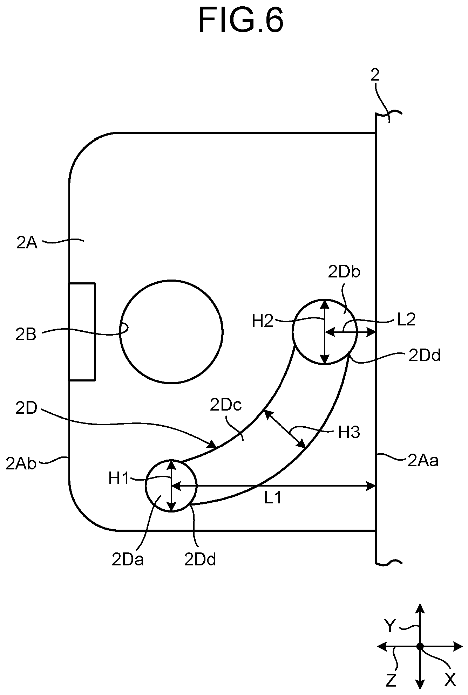

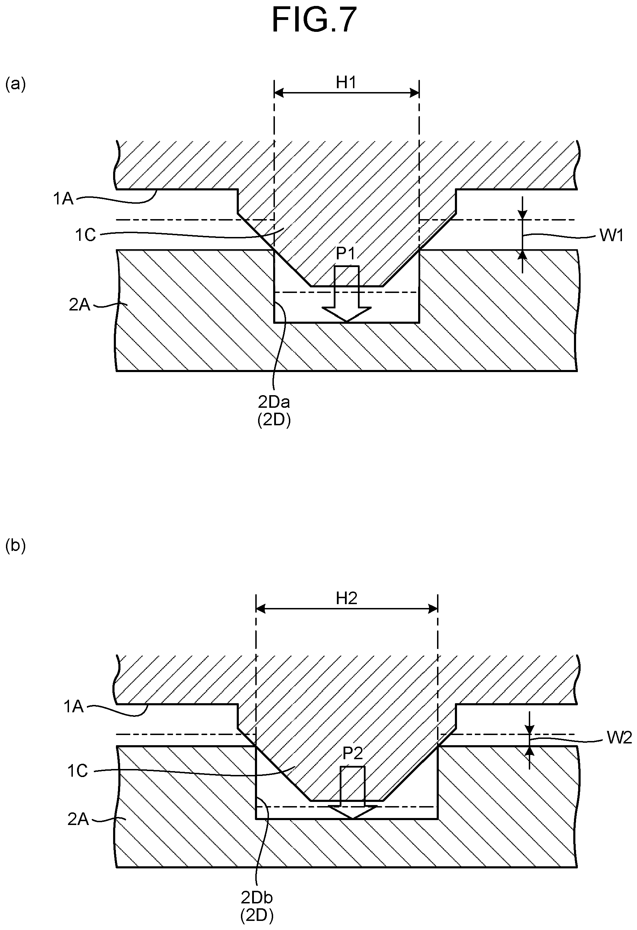

FIG. 6 is a plan view illustrating a main part of another example of the opening and closing structure according to the embodiment. FIG. 7 is a cross-section illustrating a main part of another example of the opening and closing structure according to the embodiment. FIG. 6 and FIG. 7 illustrate a concave portion 2D in a form different from the concave portion 2C described above. The concave portion 2D includes a first concave portion 2Da, a second concave portion 2Db, and a third concave portion 2Dc.

The first concave portion 2Da is arranged at such a position that it is engaged with the convex portion 1C when the opening and closing flap 2 moves in rotation in one direction of opening and closing, in this embodiment, when the opening and closing flap 2 is moved to the closed state. The first concave portion 2Da is formed such that a protruding end formed in a conical shape or a hemispherical shape of the convex portion 1C engages with its opening edge.

The second concave portion 2Db is arranged at such a position that it engages with the convex portion 1C when the opening and closing flap 2 moves in rotation in the other direction of opening and closing, in this embodiment, when the opening and closing flap 2 is moved to the open state. The second concave portion 2Db is formed such that the protruding end formed in a conical shape or a hemispherical shape of the convex portion 1C engages with its opening edge.

The first concave portion 2Da and the second concave portion 2Db are arranged along a trajectory of a circle centered around the shaft hole 2B. In the embodiment, the first concave portion 2Da and the second concave portion 2Db are arranged to have a positional relationship of 90 degrees around the shaft hole 2B to rotate the opening and closing flap 2 rotates by 90 degrees between the closed state and the open state. For example, the first concave portion 2Da and the second concave portion 2Db are arranged to have a positional relationship of 100 degrees around the shaft hole 2B when the opening and closing flap 2 is rotated by 100 degrees between the closed state and the open state.

Moreover, the first concave portion 2Da and the second concave portion 2Db are arranged such that the first concave portion 2Da is arranged on the distal end 2Ab side and the second concave portion 2Db is arranged on a base end 2Aa side in an extending direction (forward-backward direction (Z direction)) of the supporting portion 2A that extends from the opening and closing flap 2 in a cantilevered manner. The first concave portion 2Da is arranged at a position at the distance L1 from the base end 2Aa of the supporting portion 2A. The second concave portion 2Db is arranged at a position at the distance L2 from the proximal end 2Aa of the supporting portion 2A. As for the distances L1, L2, the distance L1 of the first concave portion 2Da is longer than the distance L2 of the second concave portion 2Db.

Moreover, the first concave portion 2Da is formed in a circular shape such that a diameter of an opening edge is H1. The second concave portion 2Db is formed in a circular shape such that a diameter of an opening edge is H2. As for the diameter H1, H2, the diameter H1 of the first concave portion 2Da is smaller than the diameter H2 of the second concave portion 2Db. These diameters H1, H2 are arranged so that the supporting portion 2A in a cantilever shape deflects in the vertical direction when the convex portion 1C engages with the concave portions 2Da, 2Db. The opening and closing flap 2 is arranged without looseness with respect the main unit in the closed state and the open state as the supporting portion 2A deflects.

Furthermore, in the opening and closing flap 2, as illustrated in FIG. 6 and FIG. 7 (a), since the first concave portion 2Da at the far distance L1 from the proximal end 2Aa of the supporting portion 2A is formed to have the small diameter H1, the supporting portion 2A has a relatively large amount of the deflection W1 as a thin end on the distal end side of the protruding end of the convex portion 1C engages therewith in the closed state in which the convex portion 1C engages with the first concave portion 2Da. Moreover, in the opening and closing flap 2, since the second concave portion 2Db at the close distance L2 from the proximal end 2Aa of the supporting portion 2A is formed to have the large diameter H2 as illustrated in FIG. 6 and FIG. 7 (b), the supporting portion 2A has a relatively small amount of the deflection W2 as a thick portion on the proximal end side the protruding end of the convex portion 1C engages therewith in the open state in which the convex portion 1C engages with the second concave portion 2Db. As described, in the opening and closing structure of the embodiment, the deflections W1, W2 of the supporting portion 2A are set by differing the diameters H1, H2 according to arrangement of the distances L1, L2 of the concave portions 2Da, 2Db since the supporting portion 2A is a cantilever and becomes easier to deflect as it approaches the distal end 2Ab farther from the base end 2Aa. Therefore, in the opening and closing structure of the embodiment, the loads P1, P2 for bending the supporting portion 2A can be equivalent to each other in the closed state and the open state of the opening and closing flap 2, and an operator can perform opening and closing operation with natural feeling without discomfort. When it is desired to make the operational feel in either one of the closed state and the open state heavier, the diameter H1 or H2 of the relevant concave portion 2Da or 2Db may be made smaller, and on the other hand, when it is desired to make the operational feel lighter, the diameter H1 or H2 of the relevant one of the concave portion 2Da or 2Db may be made larger, to set the deflections W1, W2, and the loads P1, P2 are set to bend the supporting portion 2A appropriately. In the embodiment, as illustrated in FIG. 6, to minimize the deflection W2 at the distance L2 that is the closest to the base end 2Aa of the supporting portion 2A in the concave portion 2D, the second concave portion 2Db may be formed to have the diameter H2 such that the protruding end of the convex portion 1C comes in contact with a bottom of the second concave portion 2Db.

The third concave portion 2Dc is formed in an arc shape centered around the pivot pin 1B (the shaft hole 2B) connecting the first concave portion 2Da and the second concave portion 2Db. Therefore, the third concave portion 2Dc is arranged on a trajectory of the convex portion 1C as the opening and closing flap 2 is moved between the closed state and the open state. In the opening and closing structure according to the embodiment, the third concave portion 2Dc is formed such that an engagement form with respect to the convex portion 1C gradually varies between the first concave portion 2Da and the second concave portion 2Db. Specifically, the third concave portion 2Dc is formed such that the width H3 of an opening edge of the arc shape becomes smaller as it approaches the first concave portion 2Da the diameter H1 of which is relatively small, and becomes larger as it approaches the second concave portion 2Db the diameter H2 of which is relatively large. Therefore, in the opening and closing flap 2, the deflections W1, W2 of the supporting portion 2A are adjusted while moving between the closed state and the open state, and the load P3 (refer to FIG. 5) that bends the supporting portion 2A becomes equivalent in the longitudinal direction of the third concave portion 2Dc, and the opening and closing operation can be performed by the operator with a uniform operational feel between the first concave portion 2Da and the second concave portion 2Db. In the opening and closing structure according to the embodiment, the third concave portion 2Dc is formed such that the width H3 is smaller than the diameters H1, H2, and a boundary at which the third concave portion 2Dc is connected to the first concave portion 2Da and the second concave portion 2Db is formed as a narrow portion 2Dd narrower than the diameters H1, H2. Therefore, when the opening and closing flap 2 is brought to the closed state and the open state, the convex portion 1C engages with the first concave portion 2Da and the second concave portion 2Db through the narrow portion 2Dd. Therefore, in the opening and closing structure according to the embodiment, when the opening and closing flap 2 is operated to be in the closed state and the open state, the convex portion 1C falls in the first concave portion 2Da and the second concave portion 2Db through the narrow portion 2Dd with a tactile feedback to the operator. When a tactile feedback is not desired, the width H3 may be set to the same dimensions as the diameters H1, H2 without arranging the narrow portion 2Dd.

As described, the opening and closing structure according to the embodiment is an opening and closing structure with an opening and closing flap 2 that opens and closes an opening portion 1A of a main unit 1, includes: a supporting portion 2A that is provided in the opening and closing flap 2 and that is formed to extend in a cantilevered manner with flexibility; a pivot pin 1B that rotatably supports the supporting portion 2A with respect to the main unit 1; a convex portion 1C that is arranged in the main unit 1; and a concave portion 2C(2D) that is arranged in the supporting portion 2A and that engages with the convex portion 1C, wherein the concave portion 2C(2D) comprises a first concave portion 2Ca(2Da) that engages with the convex portion 1C when the opening and closing flap 2 moves in one direction of opening and closing, and a second concave portion 2Cb(2Db) that engages with the convex portion 1C when the opening and closing flap 2 moves in another direction of opening and closing, and the first concave portion 2Ca(2Da) and the second concave portion 2Cb(2Db) have different engagement forms for the convex portion 1C.

The first concave portion 2Ca (2Da) and the second concave portion 2Cb (2Db) arranged in the supporting portion 2A rotates around the pivot pin 1B, and engages with the convex portion 1C when the opening and closing flap 2 moves to open and close. In the supporting portion 2A in a cantilever shape, the first concave portion 2Ca (2Da) and the second concave portion 2Cb (2Db) have the different distances L1, L2 from the base end 2Aa of the supporting portion 2A, and have different loads by the deflection of the supporting portion 2A and, therefore, the operational feel applied to the operator differs when engaging with the convex portion 1C. In this regard, according to the opening and closing structure of the embodiment, the first concave portion 2Ca (2Da) and the second concave portion 2Cb (2Db) are formed to have different engagement forms with respect to the convex portion 1C. Therefore, the opening and closing structure of the embodiment adjusts the deflections W1, W2 of the supporting portion 2A to set the loads P1, P2. Therefore, by setting the loads P1, P2 appropriately, the opening and closing structure of the embodiment can set the operational feel applied to the operator when the first concave portion 2Ca (2Da) and the second concave portion 2Cb (2Db) engage with the convex portion 1C.

Moreover, in the opening and closing structure of the embodiment, the depths T1, T2 of the first concave portion 2Ca (2Da) and the second concave portion 2Cb (2Db) are different. Furthermore, in the opening and closing structure of the embodiment, the diameters H1, H2 of the first concave portion 2Ca (2Da) and the second concave portion 2Cb (2Db) are different.

In this opening and closing structure, by varying the engagement forms of the first concave portion 2Ca (2Da) and the second concave portion 2Cb (2Db) with the convex portion 1C with the depths T1, T2 or the diameterss H1, H2, the deflections W1, W2 of the supporting portion 2A are adjusted, and the loads P1, P2 can be set. In the opening and closing structure of the embodiment, the depths T1, T2 and the diameters H1, H2 of the first concave portion 2Ca and the second concave portion 2Cb may be different. That is, in the opening and closing structure of the embodiment, at least one of the depths T1, T2 and the diameters H1, H2 of the first concave portion 2Ca and the second concave portion 2Cb is different.

Moreover, in the opening and closing structure of the embodiment, the first concave portion 2Ca (2Da) engages with the convex portion 1C when the opening and closing flap 2 is in the closed state, and the second concave portion 2Cb (2Db) engages with the convex portion 1C when the opening and closing flap 2 is in the open state.

In this opening and closing structure, the operational feel applied to the operator can be set for the closed state and the open state of the opening and closing flap 2.

Moreover, in the opening and closing structure of the embodiment, the concave portion 2C (2D) further includes the third concave portion 2Cc (2Dc) formed in an arc shape centered around the pivot pin 1B connecting the first concave portion 2Ca (2Da) and the second concave portion 2Cb (2Db), and the engagement form of the third concave portion 2Cc (2Dc) with the convex portion 1C gradually varies between the first concave portion 2Ca (2Da) and the second concave portion 2Cb (2Db).

In this opening and closing structure, by the third concave portion 2Cc (2Dc), the deflection W3 of the supporting portion 2A can be adjusted between the first concave portion 2Ca (2Da) and the second concave portion 2Cb (2Db), to set the load P3. Therefore, in the opening and closing structure of the embodiment, it is possible to set the operational feel applied to the operator between the first concave portion 2Ca (2Da) and the second concave portion 2Cb (2Db) by setting the load P3 appropriately.

Furthermore, in the opening and closing structure of the embodiment, the third concave portion 2Cc has the depth T3 that gradually varies between the first concave portion 2Ca and the second concave portion 2Cb. Moreover, in the opening and closing structure of the embodiment, the third concave portion 2Dc has the width H3 that gradually varies between the first concave portion 2Da and the second concave portion 2Db.

In the opening and closing structure, by varying the engagement form of the third concave portion 2Cc (2Dc) between the first concave portion 2Ca (2Da) and the second concave portion 2Cb (2Db) with the convex portion 1C by the depth T3 and the width H3, the deflection W3 of the supporting portion 2A is adjusted, and the load P3 can be set. In the opening and closing structure of the embodiment, the third concave portion 2Cc may vary in the depth T3 and the width H3 between the first concave portion 2Ca and the second concave portion 2Cb. That is, in the opening and closing structure of the embodiment, the third concave portion 2Cc have at least one of the depth T3 and the width H3 gradually varies between the first concave portion 2Ca and the second concave portion 2Cb.

**Industrial Applicability**

The opening and closing structure of the present disclosure is enabled to set the operational feel when the cantilever opening and closing lid is opened and closed.

**Claims**

1.   An opening and closing structure with an opening and closing flap (2) that opens and closes an opening portion (1A) of a main unit (1), comprising:

a supporting portion (2A) that is provided in the opening and closing flap (2) and that is formed to extend in a cantilevered manner with flexibility;

a pivot pin (1B) that rotatably supports the supporting portion (2A) with respect to the main unit (1);

**characterized by** the opening and closing structure further comprising

a convex portion (1C) that is arranged in the main unit (1); and

a concave portion (2C, 2D) that is arranged in the supporting portion (2A) and that engages with the convex portion (1C), wherein

the concave portion (2C, 2D) comprises a first concave portion (2Ca, 2Da) that engages with the convex portion (1C) when the opening and closing flap (2) moves in one direction of opening and closing, and a second concave portion (2Cb, 2Db) that engages with the convex portion (1C) when the opening and closing flap (2) moves in another direction of opening and closing, and

the first concave portion (2Ca, 2Da) and the second concave portion (2Cb, 2Db) have different engagement forms for the convex portion (1C).

2. The opening and closing structure according to claim 1, wherein
at least one of a depth (T1, T2) and a diameter (H1, H2) of the first concave portion (2Ca, 2Da) and the second concave portion (2Cb, 2Db) differ from each other.

3. The opening and closing structure according to claims 1 or 2, wherein
the first concave portion (2Ca, 2Da) engages (2Ca, 2Da) with the convex portion (1C) in a closed state of the opening and closing flap (2), and the second concave portion (2Cb, 2Db) engages with the convex portion (1C) in an open state of the opening and closing flap (2).

4. The opening and closing structure according to any one of claims 1 to 3, wherein
the concave portion (2C, 2D) further includes a third concave portion (2Cc, 2Dc) that connects the first concave portion (2Ca, 2Da) and the second concave portion (2Cb, 2Db) and that is formed in an arc shape centered around the pivot pin (1B), and an engagement form of the third concave portion (2Cc, 2Dc) with the convex portion (1C) gradually varies between the first convex portion (2Ca, 2Da) and the second convex portion (2Cb, 2Db).

5. The opening and closing structure according to claim 4, wherein
the third concave portion (2Cc, 2Dc) varies in at least one of a depth (T3) and a width (H3) thereof between the first convex portion (2Ca, 2Da) and the second convex portion (2Cb, 2Db).


**Patentansprüche**

1. Ein Öffnungs- und Schließaufbau mit einer Öffnungs- und Schließklappe (2), die einen Öffnungsteil (1A) einer Haupteinheit (1) öffnet und schließt, aufweisend:

einen Halteteil (2A), der in der Öffnungs- und Schließklappe (2) vorgesehen ist und ausgebildet ist, um sich auskragend mit einer Flexibilität zu erstrecken,

einen Schwenkzapfen (1B), der den Halteteil (2A) drehbar in Bezug auf die Haupteinheit (1) hält,

**dadurch gekennzeichnet, dass** der Öffnungs- und Schließaufbau weiterhin aufweist:

einen konvexen Teil (1C), der in der Haupteinheit (1) angeordnet ist, und

einen konkaven Teil (2C, 2D), der in dem Halteteil (2A) angeordnet ist und mit dem konvexen Teil (1C) eingreift, wobei:

der konkave Teil (2C, 2D) einen ersten konkaven Teil (2Ca, 2Da), der mit dem konvexen Teil (1C) eingreift, wenn sich die Öffnungs- und Schließklappe (2) in einer Richtung für ein Öffnen und Schließen bewegt, und einen zweiten konkaven Teil (2Cb, 2Db), der mit dem konvexen Teil (1C) eingreift, wenn sich die Öffnungs- und Schließklappe (2) in einer anderen Richtung für ein Öffnen und Schließen bewegt, und der erste konkave Teil (2Ca, 2Da) und der zweite konkave Teil (2Cb, 2Db) verschiedene Eingreifformen für den konvexen Teil (1C) aufweisen.

2. Öffnungs- und Schließaufbau nach Anspruch 1, wobei:
die Tiefe (T1, T2) und/oder der Durchmesser (H1, H2) des ersten konkaven Teils (2Ca, 2Da) und des zweiten konkaven Teils (2Cb, 2Db) voneinander verschieden sind.

3. Öffnungs- und Schließaufbau nach Anspruch 1 oder 2, wobei:
der erste konkave Teil (2Ca, 2Da) mit dem konvexen Teil (1C) in einem geschlossenen Zustand der Öffnungs- und Schließklappe (2) eingreift (2Ca, 2Da) und der zweite konkave Teil (2Cb, 2Db) mit dem konvexen Teil (1C) in einem geöffneten Zustand der Öffnungs- und Schließklappe (2) eingreift.

4. Öffnungs- und Schließaufbau nach einem der Ansprüche 1 bis 3, wobei:
der konkave Teil (2C, 2D) weiterhin einen dritten konkaven Teil (2Cc, 2Dc), der den ersten konkaven Teil (2Ca, 2Da) und den zweiten konkaven Teil (2Cb, 2Db) verbindet und in einer um den Schwenkzapfen (1B) zentrierten Bogenform ausgebildet ist, umfasst, wobei die Eingreifform des dritten konkaven Teils (2Cc, 2Dc) mit dem konvexen Teil (1C) graduell zwischen dem ersten konvexen Teil (2Ca, 2Da) und dem zweiten konvexen Teil (2Cb, 2Db) variiert.

5. Öffnungs- und Schließaufbau nach Anspruch 4, wobei:
der dritte konkave Teil (2Cc, 2Dc) in der Tiefe (T3) und/oder in der Breite (H3) zwischen dem ersten konvexen Teil (2Ca, 2Da) und dem zweiten konvexen Teil (2Cb, 2Db) variiert.


**Revendications**

1. Structure d'ouverture et de fermeture munie d'un volet d'ouverture et de fermeture (2) qui ouvre et ferme une partie ouvrante (1A) d'une unité principale (1), comprenant :

une partie de support (2A) prévue dans le volet d'ouverture et de fermeture (2) et formée pour s'étendre en porte-à-faux avec flexibilité ;
un axe de pivot (1B) qui supporte en rotation la partie support (2A) par rapport à l'unité principale (1) ;
**caractérisée en ce que** la structure d'ouverture et de fermeture comprend en outre
une partie convexe (1C) disposée dans l'unité principale (1) ; et
une partie concave (2C, 2D) disposée dans la partie support (2A) et qui s'engage avec la partie convexe (1C), dans laquelle
la partie concave (2C, 2D) comprend une première partie concave (2Ca, 2Da) qui s'engage avec la partie convexe (1C) lorsque le volet d'ouverture et de fermeture (2) se déplace dans un sens d'ouverture ou de fermeture, et une deuxième partie concave (2Cb, 2Db) qui s'engage avec la partie convexe (1C) lorsque le volet d'ouverture et de fermeture (2) se déplace dans l'autre sens de fermeture ou d'ouverture, et
La première partie concave (2Ca, 2Da) et la deuxième partie concave (2Cb, 2Db) ont des formes d'engagement différentes pour la partie convexe (1C).

2. Structure d'ouverture et de fermeture selon la revendication 1, dans laquelle
au moins une parmi une profondeur (T1, T2) et un diamètre (H1, H2) de la première partie concave (2Ca, 2Da) et de la deuxième partie concave (2Cb, 2Db) diffèrent l'un de l'autre.

3. Structure d'ouverture et de fermeture selon la revendication 1 ou 2, dans laquelle
la première partie concave (2Ca, 2Da) s'engage (2Ca, 2Da) avec la partie convexe (1C) à l'état fermé du volet d'ouverture et de fermeture (2), et la deuxième partie concave (2Cb, 2Db) s'engage avec la partie convexe (1C) à l'état ouvert du volet d'ouverture et de fermeture (2).

4. Structure d'ouverture et de fermeture selon l'une quelconque des revendications 1 à 3, dans laquelle
la partie concave (2C, 2D) comporte en outre une troisième partie concave (2Cc, 2Dc) qui connecte la première partie concave (2Ca, 2Da) et la deuxième partie concave (2Cb, 2Db) et qui est formée en forme d'arc centrée autour de l'axe de pivot (1B), et une forme d'engagement de la troisième partie concave (2Cc, 2Dc) avec la partie convexe (1C) varie progressivement entre la première partie convexe (2Ca, 2Da) et la deuxième partie convexe (2Cb, 2Db).

5. Structure d'ouverture et de fermeture selon la revendication 4, dans laquelle
la troisième partie concave (2Cc, 2Dc) varie en au moins une parmi sa profondeur (T3) et sa largeur (H3) entre la première partie convexe (2Ca, 2Da) et la deuxième partie convexe (2Cb, 2Db).

# FIG.1

# FIG.2

# FIG.3

# FIG.4

FIG.5

# FIG.6

# FIG.7

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013103594 A

- JP H0644186 U